# EUROPÄISCHE PATENTSCHRIFT

(11) **EP 3 032 779 B1**
(45) Veröffentlichungstag und Bekanntmachung des Hinweises auf die Patenterteilung: **21.06.2017**
(21) Anmeldenummer: 15003428.8
(22) Anmeldetag: 02.12.2015
(51) Int. Cl.: H04L 12/40, H04J 3/06, H04L 12/26

(54) **VERFAHREN ZUR BESTIMMUNG DER SIGNALQUALITÄT IN EINEM CAN-PROTOKOLL BASIERTEN NETZWERK**
METHOD FOR DETERMINING SIGNAL QUALITY IN A CAN PROTOCOL BASED NETWORK
PROCEDE DE DETERMINATION DE LA QUALITE DE SIGNAL DANS UN RESEAU FAISANT APPEL A UN PROTOCOLE CAN

(30) Priorität: 10.12.2014 DE 102014018152
(43) Veröffentlichungstag der Anmeldung: 15.06.2016
(73) Patentinhaber: WILO SE, 44263 Dortmund (DE)
(72) Erfinder: Hildebrand, Robert, 45279 Essen (DE)
(74) Vertreter: Cohausz Hannig Borkowski Wißgott

(56) Entgegenhaltungen:
- WO-A1-2006/003540
- DE-A1- 10 358 584

## Beschreibung

Die vorliegende Erfindung betrifft ein Verfahren zur Bestimmung der Signalqualität eines CAN-Protokoll basierten Kommunikationsnetzwerks mit einem Bus und zwei oder mehr über diesen mittels Datentelegrammen kommunizierenden Teilnehmern. Ferner betrifft die Erfindung einen Teilnehmer des Kommunikationsnetzwerks zur Bestimmung der Signalqualität der Kommunikation in dem Kommunikationsnetzwerk.

Bei CAN-Protokoll basierten Kommunikationsnetzwerken ist die Kommunikation durch das CAN (Controller Area Network)-Protokoll nach ISO 11898 definiert. In diesem Protokoll ist festgelegt, welches Format die Datentelegramme aufweisen, insbesondere an welcher Stelle innerhalb eines Datentelegramms welche Informationen vorliegen, sowie wann welcher Teilnehmer auf dem Bus senden darf bzw. senden soll. Wie jedes Netzwerk unterliegt auch ein CAN-Protokoll basiertes Netzwerk externen Einflüssen, die zu Störungen in der Kommunikation auf dem Bus führen können. So beeinträchtigen beispielsweise lange Busleitungen mit entsprechend weiten Kommunikationswegen, eine schlechte Busleitungsqualität oder schlechte Verkabelung (Verletzung der Topologieregeln beim Installationsprozess), eine hohe Signaldämpfung auf der Busleitung, elektromagnetische Streufelder oder fehlende oder falsche Abschlusswiderstände die Buskommunikation. Auch mechanische Beschädigungen der Busleitung wie Knicke oder enge Biegeradien können die Kommunikation beeinträchtigen. Zusätzlich beeinflussen Geräteeigenschaften wie z.B. durch Pegelwandler und Schutzbeschaltungen versursachte Signallaufzeiten das gesamte Signalverhalten.

Das CAN-Protokoll kennt verschiedene Mechanismen, um die Datenintegrität zu gewährleisten. So sind beispielsweise zyklische Datenredundanzprüfungen (CRC) oder Quittierregeln vorhanden. Gleichwohl besitzt der CAN-Standard keine physikalische oder mathematische Größe, die eine unmittelbare Bewertung der Signalqualität der Kommunikation ermöglicht bevor messbare Fehler auftreten. So kann es zu einem plötzlichen Verlust der Kommunikation führen, ohne dass es hierzu eine Vorwarnung gab.

Die Signalqualität eines CAN-Protokoll basierten Kommunikationsnetzwerks ist nicht nur durch die kommunizierenden Teilnehmer bestimmt, die ohnehin qualifiziert werden müssen, um gewisse Qualitätsparameter zu gewährleisten und um damit für einen CAN-Bus einsatzfähig zu sein. Sie ist auch von der Planung und Installation des Kommunikationsnetzwerks abhängig. Bei der Planung werden häufig Daumenregeln verwendet, um die topologischen Grenzen für die Busleitungslänge, die Anzahl an Stichleitungen oder Netzanschluss- bzw. Abschlusspunkte festzustellen. Es ist deshalb schwer, die Kommunikationsqualität zu kontrollieren respektive zu garantieren.

Für die Beurteilung der Signalqualität ist es bekannt, entweder ein Modell des Kommunikationsnetzwerks einschließlich aller angeschlossenen und kommunizierenden Teilnehmer zu simulieren oder Signal-Analyzer zu verwenden, die die tatsächliche Kommunikation auf dem Bus untersuchen. Die erstgenannte Variante ist prinzipbedingt nur eine rein theoretische Bewertungsmethode, die die örtlichen Gegebenheiten, Besonderheiten und insbesondere die installationsbedingten Fehler und sonstigen Beeinträchtigungen der Kommunikation nicht erfassen kann. Hier sind Signal-Analyzer die bessere Wahl, die zudem auch Informationen über tatsächliche Größen der Kommunikation wie beispielsweise die Flankensteilheit (Slew Rate), die Amplituden oder die Welligkeit (Ripple) ermitteln können. Signal-Analyzer sind jedoch vergleichsweise teuer und liefern lediglich Rohinformationen, die anschließend von einem geschulten Fachmann interpretiert werden müssen.

Das Dokument WO 2006/003540 A1 offenbart ein CAN Sende-Empfangsbaustein, der eine Schaltung zur bitratenunabhängigen Analyse des digitalen Bus-Signals enthält. Damit wird die zeitliche Dauer der aufeinanderfolgenden rezessiven und dominanten Phasen des CAN-Bus Protokolls gemessen und verglichen.

Die Druckschrift DE10358583 A1 offenbart ferner ein Verfahren und eine Vorrichtung zum Aufwecken von Teilnehmer eines Bussystems in einem CAN-Bus System, wobei das Zeitintervall zwischen den Signalflanken gemessen werden und der entsprechende Teilnehmer aktiviert wird.

Es ist Aufgabe der vorliegenden Erfindung, ein Verfahren bereitzustellen, das eine einfache und zuverlässige Bestimmung der Signalqualität eines CAN-Protokoll basierten Kommunikationsnetzwerks ermöglicht und auf einfache Weise in einen Teilnehmer des Kommunikationsnetzwerks integriert werden kann. Ferner ist es Aufgabe der Erfindung, einen Teilnehmer für das CAN-Protokoll basierte Kommunikationsnetzwerk bereitzustellen, der zu Bestimmung der Signalqualität eingerichtet ist.

Diese Aufgaben werden durch die Merkmale des Anspruchs 1 und 16 gelöst. Vorteilhafte Weiterbildungen sind in den jeweiligen Unteransprüchen angegeben.

Erfindungsgemäß wird vorgeschlagen, die Dauer eines Quittiersignals zu ermitteln und auszuwerten, das von zumindest einem der Teilnehmer infolge des Empfangs eines Datentelegramms gesendet wird. Die Kernidee der vorliegenden Erfindung besteht darin, in der CAN-Bus-Kommunikation ein charakteristisches Signal (Bit) zu verwenden, das als Bewertungsgröße für die Signalqualität herangezogen werden kann. Dies ist erfindungsgemäß das Quittiersignal, welches empfangende Teilnehmer am Bus nach dem Empfang eines Datentelegrammes bzw. nach dem Empfang der in einem Datentelegramm vorhandenen Nutzdaten als Bestätigung der formalen Korrektheit an den sendenden Teilnehmer zurück übermitteln. Das Quittiersignal bestätigt den Empfang eines ordnungsgemäßen Datentelegramms.

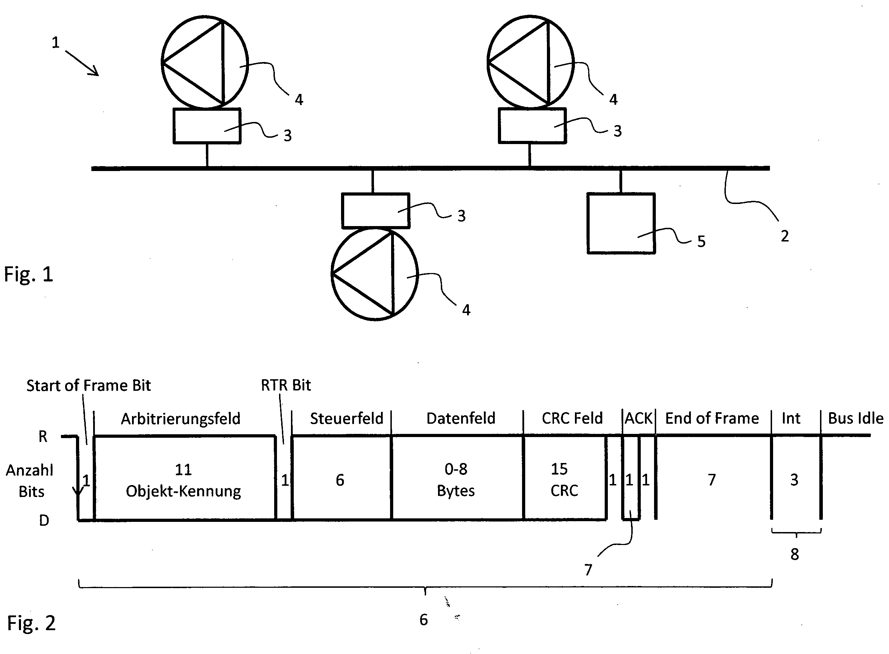

Das Quittiersignal hat innerhalb der Kommunikation auf dem Bus eine besondere Stellung und damit verbundenen Vorteile, was anhand Figur 2 deutlich wird.

Figur 2 zeigt ein beispielhaftes Datentelegramm 6, das von einem der Teilnehmer über den Bus gesendet wird. Ein solches Datentelegramm gemäß dem CAN-Protokoll besitzt verschiedene Felder, wobei jedes Feld aus einer bestimmten Anzahl an Bits besteht. Ein logischer Wert eines Bits wird entweder mit einem rezessiven Pegel R oder einem dominanten Pegel D übertragen. Die in einem Datentelegramm übertragenen Nutzdaten sind in einem Datenfeld enthalten, dem ein Prüfsummenfeld folgt. Unmittelbar nach diesem Prüfsummenfeld gibt es ein aus zwei Bits bestehendes Quittierfeld (ACK-Feld). Das erste Bit dieses Feldes ist dafür vorgesehen, dass alle empfangenden Teilnehmer ein Quittiersignal zur Bestätigung der formalen Korrektheit senden, weshalb es auch als Acknowledge-Bit bezeichnet wird. Wenn ein oder mehrere Teilnehmer den Empfang eines Datentelegramms quittieren, dann erfolgt dies folglich während des ersten Bits des Quittierfeldes. Der sendende Teilnehmer sendet hier nicht, bzw. nur mit einem rezessiven Pegel R, der durch einen dominanten Pegel D übersteuert wird. Das Quittiersignal wird also mit einem dominanten Pegel D gesendet.

Wie anhand des Datentelegrammes 6 in Figur 2 erkennbar ist, besteht eine erste besondere Eigenschaft des Quittiersignals darin, dass es das einzige Bit mit einem dominanten Pegel D innerhalb bzw. während des Datentelegramms, bei dem vorher und nachher ein rezessiver Pegel R vorliegt, der nicht durch einen dominanten Pegel D irgendeines Teilnehmers übersteuert werden kann. Damit besitzt das Quittiersignal einen in jedem Fall feststellbaren Anfang sowie ein in jedem Fall feststellbares Ende. Dies ist bei anderen Bits eines Datentelegramms nicht der Fall. So kann beispielsweise beim "Start of Frame-Bit" oder beim "Remote-Transmission-Request-Bit" (RTR-Bit) das unmittelbar nachfolgende Bit denselben Spannungspegel haben wie das Start of Frame Bit oder das Remote-Transmission-Request-Bit, so dass dessen Ende nicht eindeutig bestimmbar ist.

Darüber hinaus ist dem Quittiersignal eine zweite besondere Eigenschaft deshalb gegeben, weil alle empfangenden Teilnehmer das Quittiersignal gemäß der Definition im CAN-Protokoll gleichzeitig senden. Somit überlagern sich stets alle einzelnen Quittiersignale auf dem Bus, jedenfalls zumindest dann, wenn das Kommunikationsnetzwerk mehr als einen empfangenden Teilnehmer umfasst. Wenngleich jedes von einem Teilnehmer gesendete einzelne Quittiersignal exakt ein Bit lang ist, ergibt sich aufgrund dieser Überlagerung und der Tatsache, dass die einzelnen Quittiersignale nicht exakt zum selben Zeitpunkt gesendet werden und verschiedenen Störeinflüssen unterliegen, dass das auf dem Bus sichtbare resultierende Gesamt-Quittiersignal "verschmiert", so dass es häufig nicht exakt ein Bit lang ist. Schuld daran ist meist eine ungenaue Synchronisation zwischen Sender und Empfänger (Unterschiede der inneren Uhren), oder unterschiedliche Laufzeiten der Quittiersignale, da die verschiedenen Teilnehmer topologisch an unterschiedlichen Stellen an die Busleitung angeschlossen sind. Ein auf der Busleitung messbares Quittiersignal kann somit breiter oder sogar schmaler sein als ein Bit. Aus diesem Grunde ist das Quittiersignal bei der CAN-Buskommunikation hervorragend geeignet ist, die Signalqualität der Kommunikation zu beurteilen. Schließlich besteht eine dritte besondere Eigenschaft des Quittiersignals in seiner Position, wodurch es besonders gut und einfach zu vermessen ist. Denn es ist innerhalb bzw. während eines ordnungsgemäßen, fehlerfreien Telegramms das letzte Bit, bei dem ein dominanter Pegel vorliegt.

Es sei an dieser angemerkt, dass die Verwendung des Quittiersignals auch dann zur Bestimmung der Signalqualität geeignet und von Vorteil ist, wenn es nur von einem einzigen Teilnehmer gesendet wird, sei es weil das Netzwerk nur zwei Teilnehmer umfasst, von denen einer ein Sender, der andere ein Empfänger ist, oder weil von mehreren vorhandenen Teilnehmer nur ein einziger aktiv ist oder zuhört. Besteht das am Bus sichtbare Quittiersignal nur aus einem einzigen Quittiersignal eines einzigen Teilnehmers, so gibt die bestimmbare Signalqualität unmittelbar Aufschluss über die Güte der Kommunikationsverbindung zwischen dem Sender und dem Empfänger sowie darüber, wie gut der empfangende Teilnehmer an den Bus angeschlossen ist. Es kann somit festgestellt werden, ob zwischen dem Sender und dem Empfänger eine Störung des Busses vorliegt.

Das Kommunikationsnetzwerk, bei dem die Signalqualität der Kommunikation nach dem erfindungsgemäßen Verfahren bewertet werden soll, umfasst deshalb mindestens zwei Teilnehmer, wobei ein Teilnehmer ein Datentelegramm aussendet und mindestens ein anderer Teilnehmer ein Quittiersignal in Folge des Empfangs des Datentelegramms zurücksendet.

Die Bestimmung der Dauer des Quittiersignals erfolgt vorzugsweise von mindestens einem der Teilnehmer. Dies bedeutet, dass das erfindungsgemäße Verfahren in zumindest einem der Teilnehmer implementiert ist und von diesem ausgeführt wird. Auf zusätzliche Messgeräte kann hierdurch verzichtet werden. Umfasst das Kommunikationsnetzwerk nur zwei Teilnehmer, so wird die Dauer sinnvollerweise von dem das Datentelegramm sendenden Teilnehmer ermittelt, da dieser kommunikationstechnisch die Gegenstelle zu dem das Quittiersignal sendenden Teilnehmer bildet.

Das Netzwerk kann jedoch auch mehr als zwei, beispielsweise eine Mehrzahl oder sogar eine Vielzahl an Teilnehmern aufweisen, wobei dann nach den CAN Standard alle empfangenden Teilnehmer das Quittiersignal zeitgleich aussenden. Die besondere Stärke des Verfahrens zeigt sich insbesondere, wenn eine Vielzahl von Teilnehmern das Quittiersignal aussendet, da in diesem Fall in der Dauer des Quittiersignals respektive in seiner Breite die Überlagerung aller Einflüsse vorliegt, insbesondere die verschiedenen Signallaufzeiten, Jitter oder Synchronisationsunterschiede.

Es sei an dieser Stelle angemerkt, dass, selbst wenn das Kommunikationsnetzwerk mehr als zwei Teilnehmer umfasst, das erfindungsgemäße Verfahren nicht in jedem Teilnehmer implementiert sein muss. Es genügt, wenn die Dauer des Quittiersignals von zumindest einem einzigen der Teilnehmer ermittelt wird.

Gleichwohl ist es von Vorteil, wenn zwei oder mehr Teilnehmer, insbesondere sogar alle Teilnehmer jeweils das in Folge des Empfangs eines Datentelegramms auf der Busleitung übertragene Quittiersignal vermessen, bzw. entsprechend eingerichtet sind, dies zu tun. Die Bestimmung der Dauer erfolgt dann zeitgleich in oder zumindest von diesen Teilnehmern. Hierdurch wird die Informationsmenge für die Beurteilung der Signalqualität im Gesamtnetzwerk signifikant erhöht. Es können so lokale Effekte identifiziert werden, die die Kommunikation beeinträchtigen. Insbesondere kann eine topologische Differenzierung der Signalqualität im Netzwerk, insbesondere entlang der Busleitung erfolgen. Ferner kann festgestellt werden, bei welchem der Teilnehmer oder in welchem Abschnitt des Netzwerks, insbesondere der Busleitung eine gute Signalqualität und bei welchem Teilnehmer oder in welchem anderen Abschnitt des Netzwerks, insbesondere der Busleitung eine schlechte Signalqualität vorliegt.

Von besonderem Vorteil ist es zudem, wenn die Dauer des Quittiersignals innerhalb eines, mehrerer oder aller Teilnehmer erfolgt. Denn durch die Ankopplung eines Busteilnehmers an die Busleitung kann es ebenfalls zu einer negativen Beeinträchtigung der Signalqualität kommen, insbesondere wenn aus Sicht der Busleitung hinter dem Anschluss des Teilnehmers eine Pegelwandlung stattfindet und ein Datentelegramm erst nach dieser Pegelwandlung dem CAN-Controller des Teilnehmers zugeleitet wird. Würde dagegen das Quittiersignal direkt auf der Busleitung vermessen werden, könnten busankopplungsspezifische Beeinträchtigungen der Kommunikation nicht erkannt werden. Deshalb ist es von Vorteil, die Dauer des Quittiersignals innerhalb eines Teilnehmers zu ermitteln.

Die Dauer des Quittiersignals kann entweder zeitlich oder numerisch ausgedrückt und dementsprechend zeitlich oder numerisch ermittelt werden. Im Falle einer zeitlichen Ermittlung ist unter der Dauer entsprechend eine zeitliche Dauer zu verstehen, d.h. ein Wert, der in der Einheit Sekunden angebbar ist. Im zweiten Fall wird die Dauer des Quittiersignals durch einen dimensionslosen numerischen Wert beschrieben. Die zeitliche Dauer kann beispielsweise mittels eines Zeitgebers (Timer) ermittelt werden, die numerische Dauer mittels eines Zählers. Dies beutet, dass je nachdem, ob eine zeitliche oder eine numerische Dauer des Quittiersignals ermittelt werden soll, entweder ein Zeitgeber oder ein Zähler beim Auftreten des Quittiersignals ausgelöst wird.

Gemäß einer ersten Ausführungsvariante erfolgt das Auslösen des Zeitgebers oder des Zählers nur beim Auftreten des Quittiersignals. Auftreten bedeutet in diesem Zusammenhang, dass die das Quittiersignal einleitende Flanke zu einem dominanten Pegel vorliegt. So kann beim Auftreten des Quittiersignals ein Zähler gestartet und am Ende des Quittiersignals wieder gestoppt werden. Das Ende bedeutet in diesem Zusammenhang entsprechend, dass die das Quittiersignal abschließende Flanke zu einem rezessiven Pegel vorliegt. Der die Dauer des Quittiersignals dann beschreibende Stand des Zählers kann anschließend in einem Register abgespeichert werden. Aus diesem Register kann die so erhaltene numerische Dauer anschließend geladen und verarbeitet werden. Alternativ kann beim Auftreten des Quittiersignals ein erster Zeitpunkt ermittelt und in ein erstes Register und am Ende des Quittiersignals ein zweiter Zeitpunkt ermittelt und in ein zweites Register gespeichert werden. Danach können die beiden Register ausgelesen und aus der Differenz der Zeitpunkte die zeitliche Dauer des Quittiersignals ermittelt werden, die dann verarbeitet wird.

Die beiden beschriebenen Varianten der ersten Ausführungsvariante, die den Zähler bzw. die Zeitpunktbestimmung nur beim Auftreten des Quittiersignals auslösen, setzen voraus, dass der bzw. die die Dauer des Quittiersignal ermittelnde/ ermittelnden Teilnehmer wissen, wann das Quittiersignal kommt. Empfangenden Teilnehmern ist dies grundsätzlich bekannt, da sie zum Zeitpunkt der Ermittlung der Quittiersignaldauer ohnehin selbst das Quittiersignal aussenden müssen. Hierfür sorgt der die Bus-Kommunikation eines Teilnehmers steuernde CAN-Controller, der sich zu einem sendenden Teilnehmer synchronisiert indem er die Zeitbasis empfangener Datentelegramme auswertet. Es ist daher sinnvoll, wenn das erfindungsgemäße Verfahren in dem CAN-Controller integriert ist und von diesem durchgeführt wird. Diese Integration ermöglicht es, den Zeitgeber oder Zähler gezielt nur beim Auftreten des Quittiersignals zu starten, d.h. dass er unmittelbar beim Auftreten des Quittiersignals zu laufen beginnt.

Alternativ zu der beschriebenen ersten Variante kann gemäß einer zweiten Variante vorgesehen sein, dass jedes Auftreten einer Flanke zu einem dominanten Pegel den Zähler oder Zeitgeber auslöst. Dies hat den Vorteil, dass das erfindungsgemäße Verfahren nicht in einen CAN-Controller integriert werden muss. Vielmehr kann die Ermittlung der Dauer des Quittiersignals durch eine zusätzliche externe Beschaltung des CAN-Controllers realisiert werden, die die Buskommunikation abhört und entsprechend reagiert.

So kann beispielsweise bei jedem Auftreten einer Flanke zu einem dominanten Pegel auf der Busleitung ein Zähler gestartet und beim Auftreten einer darauf folgenden Flanke zu einem rezessiven Pegel wieder gestoppt werden. Der die Dauer des Quittiersignals dann beschreibende Stand des Zählers kann anschließend in ein Register gespeichert und am Ende eines empfangenen oder, aus Sicht des Senders gesendeten, Datentelegramms aus dem Register wieder ausgelesen werden. Alternativ zum Zähler kann bei jedem Auftreten einer Flanke zu einem dominanten Pegel von einem Zeitgeber ein erster Zeitpunkt ermittelt und in ein erstes Register und beim Auftreten einer darauf folgenden Flanke zu einem rezessiven Pegel ein zweiter Zeitpunkt ermittelt und in ein zweites Register gespeichert werden. Am Ende eines empfangenen Datentelegramms kann dann das erste und zweite Register ausgelesen und aus der Differenz der Zeitpunkte die Dauer des Quittiersignals ermittelt werden.

Bei den beschriebenen beiden Varianten der zweiten Ausführungsvariante zeigt sich besonders der erhebliche Vorteil der Verwendung des Quittiersignals zur Beurteilung der Signalqualität. Denn, wenngleich das Starten des Zählers oder Timers bei jeder Flanke zu einem dominanten Pegel im Hinblick auf das Datentelegramm in Figur 2 bedeutet, dass der Zähler oder Zeitgeber z.B. auch bei dem Auftreten des Start-of-Frame-Bits und bei dem Auftreten des Remote-Transmission-Request-Bits ausgelöst wird, bzw. auch bei jeder weiteren Flanke zu einem dominanten Pegel innerhalb des Arbitrierungsfeldes, des Steuerfeldes, des Datenfeldes und des Prüfsummenfeldes, so ist das Quittiersignal 7 das letzte Bit mit einem dominanten Pegel D innerhalb bzw. während eines ordnungsgemäßen Datentelegrammes 6. Es ist daher unproblematisch, wenn der Zähler oder Zeitgeber vor dem Auftreten des zu vermessenden Quittiersignals mehrmals ausgelöst und irgendeine Dauer in das entsprechende Register gespeichert wird. Denn beim Auftreten des Quittiersignals wird der Zähler oder Zeitgeber erneut und bezogen auf ein aktuelles Datentelegramm letztmalig ausgelöst, und es wird am Ende des Quittiersignals das entsprechende Register überschrieben. Dies führt dazu, dass am Ende eines Datentelegramms nur die Dauer des interessierenden Quittiersignals in dem entsprechenden Register steht.

Bei der zweiten Ausführungsvariante ist es daher notwendig, das bzw. die Register zum richtigen Zeitpunkt auszulesen, nämlich am Ende eines Datentelegramms. Hierfür besteht jedoch nicht beliebig viel Zeit, weil das erste Register -im Falle eines Zeitgebers- am Anfang des Start-of-Frame-Bits des nächsten Datentelegramms, bzw. das zweite Register oder, wenn es -im Falle eines Zählers- nur ein Register gibt, eben dieses Register, am Ende des Start-of-Frame-Bits des nächsten Datentelegramms überschrieben wird.

Um das oder die Register rechtzeitig auszulesen wird vorgeschlagen, den von dem CAN-Controller des Teilnehmers am Ende des Empfangs oder des Sendens eines ordnungsgemäßen Datentelegramms ausgelösten Interrupt zu verwenden. Dieser Interrupt ist ein Signal, das einer Steuereinheit des Teilnehmers zugeführt werden kann. Sobald die Steuereinheit den Interrupt empfängt, greift sie auf das Register oder die Register zu und kann den Zählerstand oder die Zeitpunkte auslesen und permanent speichern, so dass sie für zeitunkritische Abfragen zur Verfügung steht. Im Falle der Zeitpunkte kann sie zudem aus diesen durch Differenzbildung die zeitliche Dauer des Quittiersignals bestimmen und diese permanent abspeichern. Darüber kann die Steuereinheit auch eingerichtet sein, die numerische oder zeitliche Dauer des Quittiersignals auszuwerten, um die Signalqualität zu bestimmen.

Unter einem "ordnungsgemäßen" Datentelegramm ist hier ein solches Datentelegramm zu verstehen, das von dem oder den an der Busleitung angeschlossenen Teilnehmern als ordnungsgemäß im Sinne des CAN-Protokolls erkannt wird. Entspricht beispielsweise ein empfangenes Datentelegramm nicht dem definierten, erwarteten Format, sind Bits korrumpiert oder ergibt sich durch Auswertung der Prüfsumme im Prüfsummenfeld, das Daten fehlerhaft empfangen worden sind, so kann sich ein empfangender Teilnehmer in einem dem Quittierfeld folgenden "End-Of-Frame" Feld beschweren. In diesem Fall gilt das empfangene Datentelegramm als nicht ordnungsgemäß. Ein Teilnehmer sendet in diesem Fall kein Quittiersignal und von dem CAN-Controller wird dann kein Sende- oder Empfangs-Interrupt ausgelöst. Einen Interrupt gibt es also nur dann, wenn ein empfangenes Datentelegramm ordnungsgemäß ist.

Gemäß einer Ausführungsvariante der Erfindung kann das Kommunikationsnetzwerk einen als Server fungierenden Teilnehmer umfassen. Dieser kann die ermittelte Dauer des Quittiersignals bei zumindest einem der Teilnehmer abfragen und bewerten, um die Signalqualität zu bestimmen. Dies hat den Vorteil, dass keine Auswertung von dem oder den anderen Teilnehmern erfolgen muss. Insoweit kann auf eine entsprechende Bewertungsintelligenz und Rechenleistung innerhalb des messenden Teilnehmers, insbesondere in der Steuereinheit, verzichtet werden. Sofern einer oder mehrere der Teilnehmer jedoch die Signalqualität selbst bewerten, kann der Server diese ermittelte Signalqualität bei zumindest einem dieser Teilnehmer abfragen.

Es sei an dieser Stelle angemerkt, dass das Kommunikationsnetzwerks auch zumindest einen Teilnehmer umfassen kann, der über eine Bewertungsintelligenz und Rechenleistung zur Bestimmung der Signalqualität verfügt, und zumindest einen anderen Teilnehmer umfassen kann, der diese nicht umfasst. Der Server kann in diesem Fall von dem einen Teilnehmer die Signalqualität abfragen und von dem anderen Teilnehmer die Dauer des Quittiersignals abfragen und eine entsprechende Bewertung der Signalqualität selbst durchführen.

Die Verwendung eines Servers den Vorteil, dass er von mehreren oder sogar allen Teilnehmern die jeweils ermittelte Dauer des Quittiersignals oder die bestimmte Signalqualität erhalten kann. Er hat somit die Möglichkeit Informationen über das gesamte Kommunikationsnetzwerk zu erhalten und gegebenenfalls zu bewerten und lokale Beeinträchtigungen der Signalqualität in einem bestimmten Netzwerkbereich, auf einem bestimmten Abschnitt der Busleitung oder bei einem bestimmten Teilnehmer zu identifizieren.

Um eine gute Bewertung der Dauer des Quittiersignals zu ermöglichen, ist eine Abtastrate zu empfehlen, die deutlich höher als die Datenrate der Kommunikation auf dem Bus ist. Insbesondere empfiehlt es sich, eine Abtastrate zu wählen, die 10 bis 200 mal größer, insbesondere 100 mal höher als die Datenrate ist. Wird in diesem Fall beispielsweise ein Zähler verwendet, so kommen auf ein übertragenes Bit genau 100 Zählerpunkte. Insoweit kann eine nominelle Bitdauer von 100 Zählerpunkten als ideale Dauer des Quittiersignals respektive als Referenzwert verwendet werden. Eine 100-mal höhere Abtastrate als die Datenrate ermöglicht es somit unmittelbar, Abweichungen von der idealen Quittiersignaldauer in Prozent angeben zu können.

Für die Bewertung der Signalqualität kann vorzugsweise die maximale Dauer aller oder einer Menge vergangener Quittiersignale ermittelt werden. Mit der maximalen Dauer kann die größte Abweichung der idealen Dauer des Quittiersignals bestimmt werden. Aus ihr kann unmittelbar eine Aussage über die Güte der Signalqualität der Buskommunikation erfolgen.

Unter Berücksichtigung, dass die Signalqualität zeitlich schwanken kann, sich insbesondere auch verbessern kann, ist es von Vorteil, die maximale Dauer aller Quittiersignale nur innerhalb eines vorbestimmten vergangenen Zeitraumes zu ermitteln. Denn anderenfalls würde eine einmal festgestellte lange Quittiersignaldauer den Schluss auf eine schlechte Signalqualität zulassen, obgleich die Signalqualität nur kurzzeitig beeinträchtigt war, jedoch zwischenzeitlich wieder stabil an Qualität gewonnen hat. Der Zeitraum kann so realisiert sein, dass einem Zeitraum überlappungsfrei ein nächster Zeitpunkt folgt. Dies bedeutet, dass am Ende des ersten Zeitraums oder am Anfang des nächsten Zeitraums die maximale Dauer wieder zurückgesetzt und im nächsten Zeitraum erneut ermittelt wird. Alternativ kann der Zeitraum als gleitender Zeitraum realisiert sein. Dies bedeutet, dass der Zeitraum zeitlich kontinuierlich fortschreitet und lediglich die älteste ermittelte Dauer mit jeder neuen Ermittlung der Quittierfelddauer gelöscht wird. Dies hat den Vorteil, dass zu jedem Zeitpunkt die maximale Dauer des zuletzt vergangenen Zeitraums vorliegt.

Es ist des Weiteren von Vorteil, wenn die Dauer des Quittiersignals kontinuierlich ermittelt wird. Damit kann die Signalqualität über der Zeit bewertet und insbesondere temporäre Einflüsse über die Zeit erkannt werden.

Eine Bewertung der Signalqualität kann durch eine Qualifizierung erfolgen. So kann die maximale Quittiersignaldauer beispielsweise qualitativ einer bestimmten Stufe einer Anzahl an Qualitätsstufen zugeordnet werden. Eine Bewertung kann durch Zuordnung einer der Stufen gering, durchschnittlich oder hoch erfolgen, wobei auch eine feinere Bewertung möglich ist.

Insbesondere kann die ermittelte Maximaldauer mit wenigstens einem Grenzwert verglichen werden, wobei der Maximaldauer bei Überschreiten dieses Grenzwerts eine bestimmte Signalqualität zugeordnet wird. Dies kann sinnvollerweise dahingehend weitergebildet werden, dass die ermittelte Maximaldauer zusätzlich mit einem zweiten oder dritten oder noch einem weiteren Grenzwert verglichen wird, wobei dem Bereich über dem ersten Grenzwert, dem Bereich zwischen dem ersten und zweiten Grenzwert und dem Bereich zwischen dem zweiten und dritten Grenzwert jeweils eine bestimmte Signalqualität zugeordnet ist. Insoweit kann jedem, durch zumindest einen Grenzwert beschränkten Bereich eine eigene Qualitätsstufe zugeordnet sein, insbesondere eine gute Signalqualität, eine mittlere Signalqualität und eine schlechte Signalqualität, wobei die mittlere Signalqualität schlechter als die gute Signalqualität und die schlechte Signalqualität schlechter als die mittlere Signalqualität ist. Hierdurch wird die zu bewertende Signalqualität praktisch qualifiziert und kann auf besonders einfache Weise angegeben und verstanden werden.

Erfindungsgemäß wird des Weiteren ein Teilnehmer eines CAN-Protokoll basierten Kommunikationsnetzwerks zur Bestimmung der Signalqualität in dem Kommunikationsnetzwerk vorgeschlagen, der eine Schnittstelle zur Kommunikation mit anderen Teilnehmern über einen Bus des Kommunikationsnetzwerks und einen CAN-Controller zur Steuerung der Kommunikation umfasst. Ferner weist der Teilnehmer eine Detektionseinheit zur Bestimmung zumindest eines die Dauer eines Quittiersignals beschreibenden oder ihre Ermittlung ermöglichenden Wertes, wenigstens ein mit der Detektionseinheit verbundenes Register zur Speicherung des zumindest einen Wertes, und eine mit dem zumindest einen Register verbundene Steuereinheit zur Auslesung des zumindest einen Registers auf.

Vorzugsweise weist die Steuereinheit Mittel zur Bestimmung der Signalqualität aus der Dauer des Quittiersignals auf. Somit müssen keine zusätzlichen Auswertemittel an den Bus angeschlossen werden.

Die Steuereinheit kann vom CAN-Controller baulich getrennt und mit diesem verbunden sein, um einen vom CAN-Controller am Ende eines Datentelegramms aussendbaren Interrupt zu erhalten. Dieser kann dann vorteilhafterweise dazu verwendet werden, das Auslesen des zumindest einen Registers durch die Steuereinheit auszulösen.

Gemäß einer Ausführungsvariante kann die Detektionseinheit einen Zähler aufweisen und dazu eingerichtet sein, diesen Zähler beim Auftreten einer Flanke zu einem dominanten Pegel auf dem Bus zu starten und beim Auftreten einer darauf folgenden Flanke zu einem rezessiven Pegel auf dem Bus zu stoppen. Der dann vorliegende Zählerstand entspricht dann dem in das Register zu schreibenden Wert. Dieser gibt die Dauer des Quittiersignals als dimensionsloser numerischer Zahlenwert an, so dass in das Register nur dieser Wert zu speichern ist.

Gemäß einer alternativen Ausführungsvariante kann die Detektionseinheit einen Zeitgeber aufweisen und dazu eingerichtet sein, mittels des Zeitgebers beim Auftreten einer Flanke zu einem dominanten Pegel auf dem Bus einen ersten Zeitpunkt und beim Auftreten einer darauf folgenden Flanke zu einem rezessiven Pegel auf dem Bus einen zweiten Zeitpunkt zu ermitteln. In diesem Fall entsprechen der erste und der zweite Zeitpunkt jeweils einem in jeweils ein Register zu schreibenden Wert.

Bei dieser alternativen Ausführungsvariante kann die Steuereinheit dazu eingerichtet sein, aus den beiden abgespeicherten Werten zunächst die zeitliche Dauer des Quittiersignals zu ermitteln, indem die Differenz aus dem zweiten und dem ersten Wert gebildet wird. Anschließend kann die Bestimmung der Signalqualität erfolgen.

Der erfindungsgemäße Teilnehmer kann vorteilhafterweise Teil der Elektronik eines elektromotorisch betriebenen Pumpenaggregats sein. Der Teilnehmer bildet somit den kommunikationstechnischen Teil der Elektronik. Dies ermöglicht die Kommunikation mit dem Pumpenaggregat über den Bus. Das Pumpenaggregat kann auf diese Weise ideal in eine Gebäudeleittechnik integriert werden. Es kann dabei einerseits als Aktor fungieren, da im beispielsweise ein Freigabesignal, eine Sollförderhöhe und/ oder Solldrehzahl vorgegeben werden kann. Andererseits kann das Pumpenaggregat als Sensor dienen, beispielsweise um pumpenspezifische Größen wie Förderstrom, Differenzdruck, Medientemperatur, Drehzahl, Motortemperatur und/ oder einen Fehlerzustand zu erfassen und über den Bus mitzuteilen. Das Pumpenaggregat kann beispielsweise eine Heizungspumpe, eine Kühlmittelpumpe oder eine Trinkwasserpumpe sein.

Der erfindungsgemäße Teilnehmer kann ferner Teil eines Gateways oder einer Anzeigevorrichtung sein.

Weitere Merkmale des erfindungsgemäßen Verfahrens können der nachfolgenden Beschreibung von Ausführungsbeispielen und der beigefügten Figuren entnommen werden.

Es zeigen:
- Figur 1: Beispielhaftes Kommunikationsnetzwerk mit Teilnehmern
- Figur 2: Standarddatentelegramm gemäß CAN-Protokoll
- Figur 3: Blockdarstellung eines beispielhaften Aufbaus eines Teilnehmers zur Ausführung des erfindungsgemäßen Verfahrens
- Figur 4: Ablaufdiagramm zu einem beispielhaften Verfahrensablauf
- Figur 5: Ablaufdiagramm zur Messung der Quittiersignaldauer mittels Zähler
- Figur 6: Ablaufdiagramm zur Messung der Quittiersignaldauer mittels Zeitgeber
- Figur7: Ablaufdiagramm für die Bestimmung einer zeitbezogenen Maximaldauer und Bewertung der Signalqualität

Figur 1 zeigt ein Kommunikationsnetzwerk 1, das einen Bus 2 in Gestalt einer Busleitung 2 und mehrere, insbesondere eine Vielzahl an diese Busleitung 2 angeschlossene Teilnehmer 3, 5 aufweist, wobei von diesen Teilnehmern 3, 5 lediglich vier dargestellt sind. Die Kommunikation zwischen den Teilnehmern 3, 5 erfolgt auf der Grundlage des CAN-Protokolls (Controller Area Network), so dass das Kommunikationsnetzwerk 1 ein CAN-Bus Netzwerk bildet.

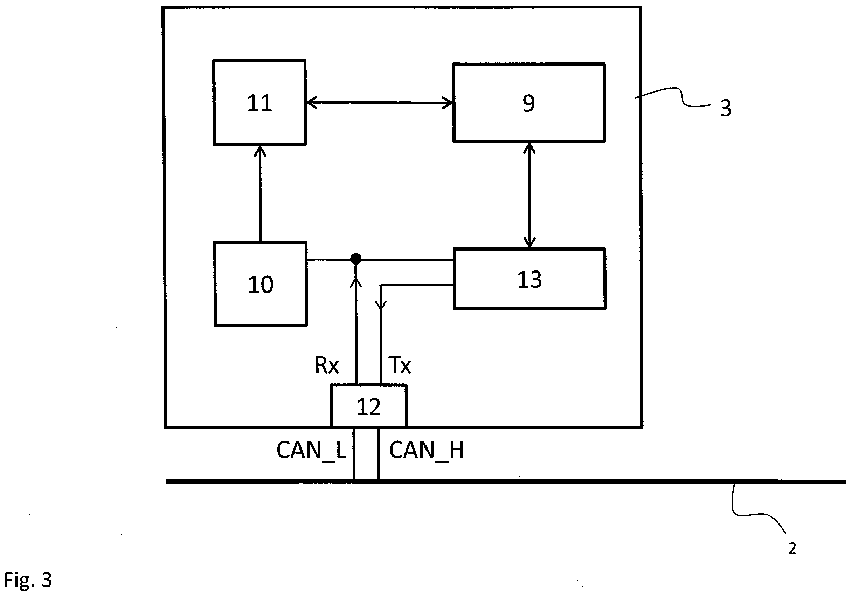

Von den vier in Figur 1 dargestellten Teilnehmer 3, 5 sind drei Teilnehmer 3 Pumpenaggregate, die einerseits aus einer mit der Bezugsziffer 4 zusammengefassten Anordnung aus Pumpeneinheit und elektromotorischer Antriebseinheit, und andererseits aus einer mit der Bezugsziffer 3 bezeichneten Pumpenelektronik besteht, die eine Kommunikationseinheit mit Schnittstelle 3a (siehe Figur 3) zum Bus 2 aufweist. Einfach ausgedrückt, bezeichnet Bezugsziffer 4 folglich die Pumpe, Bezugsziffer 3 die Elektronik. Da die Kommunikationseinheit Teil der Elektronik 3 ist, bildet sie im engeren Sinn den Teilnehmer am Bus, wohingegen die Pumpe 4 die gesteuerte Aktorik und/ oder Daten liefernde Sensorik bildet. Im allgemeinen Sinn bildet jedoch die Gesamteinheit aus Pumpe 4 und Elektronik 3 einen Busteilnehmer.

Dies vorweggeschickt zeigt Figur 2, dass die Teilnehmer 3 kommunikationstechnisch mit den anderen Teilnehmern 3, 5verbunden sind. Über die Busleitung 2 kommende Befehle werden über die Schnittstelle 12 an die eigentliche Pumpenelektronik übergeben, welche den Befehl auswertet und ggf. eine Aktion auslöst, beispielsweise eine bestimmte Sollförderhöhe bei der Pumpe 4 einstellt. Des Weiteren kann die Pumpenelektronik Daten über die Schnittstelle 12 auf die Busleitung 2 senden, insbesondere Messdaten wie beispielsweise Förderstrom oder Medientemperatur.

Figur 1 zeigt zudem einen Server 5, der zentrale Aufgaben übernimmt. Von einem solchen Diagnosegerät können auch mehrere am Bus 2 vorhanden sein. Dies können Steuerungs- und/oder Regelungsaufgaben sein. Im Sinne des nachfolgend erläuterten Beispiels übernimmt der Server 5 eine zentrale Auswerte- und Bewertungsfunktion im Rahmen des erfindungsgemäßen Verfahrens.

Figur 2 zeigt die Struktur eines Datentelegrammes 6, auch Frame genannt, gemäß CAN-Protokoll, wie es zur Datenübertragung über die Busleitung 2 verwendet wird. Es handelt sich bei dieser konkreten Struktur um ein Standardformat, wenngleich auch andere Formate, wie beispielsweise das "Extended"-Format und weitere Formate der CAN-Datentelegramme existieren. Die vorliegende Erfindung ist nicht auf ein bestimmtes Format der Datentelegramme beschränkt. Denn gemeinsam ist allen Datentelegrammen gemäß Definition im CAN-Protokoll das Vorhandensein eines Quittierfeldes ACK, was zur erfindungsgemäßen Bestimmung der Signalqualität herangezogen wird.

Die Übertragung auf der Busleitung 2 erfolgt bitweise, wobei zwischen zwei digitalen Pegeln, nämlich einem rezessivem Pegel R und einem dominanten Pegel D unterschieden wird. Der dominante Pegel D setzt sich stets auf der Busleitung 2 gegenüber einem rezessiven Pegel R durch. Die Spannungswerte der Pegel R, D sind abhängig vom verwendeten CAN-Protokoll. Beispielsweise beträgt der rezessive Pegel R, auch Ruhespannung genannt, beim Highspeed-Can-Bus 2,5 Volt, wobei die Spannung bei einem dominanten Pegel D 1,5 Volt oder 3,5 Volt beträgt, wobei der gegenüber der Ruhespannung niedrigere Pegel als CAN-Low und der gegenüber der Ruhespannung höhere Pegel als CAN-High bezeichnet wird. Dagegen sind die Pegel beim Lowspeed-CAN anders definiert. So beträgt die Ruhespannung respektive betragen die rezessiven Spannungen 5 Volt und 0 Volt, wohingegen die dominanten Spannungen 1,4 Volt für CAN-Low und 3,6 Volt für CAN-High betragen. Die Erfindung ist nicht auf einen dieser Pegel beschränkt.

Das Datentelegramm 6 gemäß Figur 2 beginnt mit einem "Start-of-Frame-Bit", welches den Beginn einer über die Busleitung 2 gesendeten Nachricht. An dieses Start-of-Frame-Bit schließt sich ein Arbitrierungsfeld an, das bei dem in Figur 2 dargestellten Datentelegramm 6 beispielhaft aus 12 Bits besteht. Diese tragen eine Objektkennung, die den Inhalt der Nachricht kennzeichnet, d.h. die Art der übertragenden Daten. So können beispielsweise Temperaturdaten eine eigene Kennung, andere Messdaten eine andere Kennung besitzen. Die ersten 11 Bits des Arbitrierungsfeldes können entweder rezessiv oder dominant gesendet werden, wohingegen das zwölfte Bit stets dominant ist. Dieses letzte Bit wird Remote-Transmission-Request-Bit genannt.

Dem Arbitrierungsfeld folgt ein Steuerfeld, das 6 Bits lang ist. Danach schließt sich das Datenfeld an, in dem die eigentlichen Nutzdaten enthalten sind. Es kann eine Länge zwischen 0 und 64 Bits in Einheiten ganzer Bytes (0 bis 8 Bytes) umfassen. Nach dem Datenfeld folgt unmittelbar ein Prüfsummenfeld aus 16 Bits, wobei das letzte Bit ein rezessives Prüfsummen-Delimiter-Bit darstellt. Innerhalb des Steuerfeldes, des Datenfeldes und der ersten 15 Bit des Prüfsummenfeldes können die Bits entweder rezessiv oder dominant sein, d.h. einen rezessiven oder dominanten Pegel aufweisen.

An das Prüfsummenfeld schließt sich das Quittierfeld ACK an, welches aus 2 Bits besteht. Das erste Bit bildet den so genannten Acknowledge-Slot oder ACK-Slot, das zweite Bit stellt einen stets rezessiven ACK-Delimiter dar. Der ACK-Slot wird verwendet, um den Empfang eines ordnungsgemäßen CAN-Datentelegrammes zu quittierten. In dem ersten Bit des Quittierfeldes muss nach dem CAN-Protokoll jeder Teilnehmer außer dem Sender ein dominantes Bit senden, um die formale Richtigkeit eines empfangenen Datentelegramms zu quittieren. Hierzu setzt jeder Empfänger, der keinen Fehler im Datentelegramm 6 feststellt, einen dominanten Pegel an der Stelle des ACK-Slots und überschreibt somit den rezessiven Pegel des Senders. Das in Figur 2 dargestellte Datentelegramm 6 zeigt somit die Überlagerung der Signale auf der Busleitung 2. Denn während ein sendender Teilnehmer 3 im Quittierfeld ACK einen rezessiven Pegel R sendet, senden die empfangenden Teilnehmer bei Empfang eines ordnungsgemäßen Datentelegramms 6 im ersten Teil des Quittierfeldes ACK einen dominanten Pegel D.

Im Falle eines Kommunikationsnetzwerks 1 mit nur zwei Teilnehmern, von denen ein Teilnehmer der Sendende ist, wird das Quittiersignal 7 nur durch ein von einem einzigen Teilnehmer ausgesendetes dominanten Bit gebildet. Dagegen erfolgt bei drei oder mehr Teilnehmern eine Überlagerung der jeweils ausgesendeten einzelnen Quittiersignale 7 auf der Busleitung 2. Als Quittiersignal im Sinne der vorliegenden Beschreibung ist daher sowohl ein einzelnes dominant gesendetes Acknowledge-Bit, d.h. ein einzelnes Quittiersignal eines einzigen Teilnehmers, als auch die Überlagerung von zwei oder mehr solcher Acknowledge-Bits, also das Summenquittiersignal aus allen einzelnen Quittiersignalen gemeint.

Nach dem Quittierfeld ACK folgt ein "End-of-Frame-Feld", das aus 7 Bits besteht, die von dem das Datentelegramm 6 sendenden Teilnehmer 3, 5 rezessiv gesendet werden. Innerhalb des End-of-Frame-Feldes kann sich ein empfangender Teilnehmer 3, 5 im Falle eines nicht ordnungsgemäßen Datentelegrammes 6 beschweren. Diese Beschwerde erfolgt in Gestalt eines dominanten Bits.

Formal ist das Datentelegramm 6 am Ende des End-of-Frame-Feldes zu Ende. Es folgen dann drei Bits eines so genannten Inter-Frame-Spaces, während denen kein Teilnehmer 3, 5 am Bus senden darf. Erst nach diesen drei Inter-Frame-Space Bits kann ein weiteres Datentelegramm 6 folgen, wobei dies dann unmittelbar folgen kann.

Es sei noch einmal darauf hingewiesen, dass das Datentelegramm in Figur 2 rein beispielhaft hier beschrieben ist und der CAN-Standard auch alternative Datentelegrammformate kennt. Das erfindungsgemäße Verfahren ist auf jegliche dieser Datentelegramme anwendbar, weil sie alle ein in Struktur und Position gleiches Quittierfeld ACK besitzen, das für das Aussenden einer Quittiersignals vorgesehen ist.

Das CAN-Protokoll stellt einen Synchronisationsmechanismus bereit, um eine bitweise Synchronisation unter den Teilnehmern zu erreichen. Dies dient der Arbitrierung und insbesondere zu Bestätigungszwecken. Erst durch diese Synchronität der Uhren der Teilnehmer ist es möglich, dass die ein Datentelegramm empfangenden Teilnehmer im ersten Bit des Quittierfeldes ACK ein Quittiersignal 7 senden können. Denn das Quittierfeld ACK ist letztendlich nur ein Zeitfenster, das durch das gesendete Datentelegramm 6 festgelegt ist, dessen Länge die Teilnehmer jedoch vor dem Empfang nicht kennen, weil das Datenfeld bei verschiedenen Datentelegrammen 6 verschieden lang sein kann. Dagegen liegt das Quittierfeld ACK bezogen auf das Ende eines Datentelegramms 6 immer an derselben Stelle.

Die Überlagerung von einzelnen Quittiersignalen führt bereits im Falle geringer zeitlicher Abweichungen in der Synchronität von Sender und Empfänger zu einer Verbreiterung des resultierenden Summenquittiersignals 7 gegenüber einer nominellen 1-Bit Dauer. Diese nominelle Dauer ist in zeitlicher Hinsicht durch die Datenrate festgelegt, so dass beispielsweise bei 125kBit pro Sekunden ein Bit eine nominelle Dauer von 8µs hat.

Alternativ kann die nominelle Dauer für die Durchführung des erfindungsgemäßen Verfahrens durch die Abtastrate eines Zählers definiert werden. Wird beispielsweise mit einer 100mal höheren Abtastrate als die Datenrate abgetastet und gezählt, kommen 100 Zählerpunkte auf ein Bit. Die Dauer des Quittiersignals 7 kann damit numerisch angegeben werden, wobei die nominelle Dauer dann 100 beträgt. Unter idealen Bedingungen sollte das Quittiersignal 7 die nominelle Dauer, d.h. eine Dauer von exakt einem Bit haben, und ferner exakt im Takt der anderen Bits des Datentelegramms liegen, d.h. exakt beginnen und enden. Dies ist jedoch in der Praxis nicht der Fall.

Je länger das Quittiersignal 7 ist, desto höher sind die Zeitabweichungen zwischen den Teilnehmern. Wenn die Zeitabweichung zu groß wird, kann sie nicht mehr durch die Teilnehmer-integrierte Synchronisierungsmechanismen ausgeglichen werden.

Daher liegt der vorliegenden Erfindung die Idee zu Grunde, die Dauer des Quittiersignals 7 als Maß für Signalqualität der Kommunikation auf der Busleitung 2 zu verwenden. Daher soll nun die Dauer dieses Quittiersignals 7 ermittelt und ausgewertet werden, um eine Aussage über die Signalqualität treffen zu können.

Das Quittiersignal 7 kann am geografischen Ort jedes Teilnehmers 3, 5 ermittelt werden, da es von jedem Teilnehmer 3, 5 gesehen werden kann. Vorzugsweise kann es von jedem Teilnehmer 3, 5 oder zumindest einem Teil der Teilnehmer 3, 5 ermittelt werden, so dass keine besonderen Messgeräte an die Busleitung 2 angeschlossen werden müssen. Insbesondere kann die Ermittlung innerhalb dieser Teilnehmer 3, 5 erfolgen, wodurch auch die Kommunikation beeinträchtigende Effekte innerhalb der Teilnehmer 3, 5, beispielsweise infolge der Busankopplung oder einer etwaigen Pegelwandlung miterfasst werden, die auf der Busleitung 2 nicht erfasst werden würden.

Die Dauer des Quittiersignals 7 ist nicht an jedem Ort der Busleitung 2 gleich. Lokale Störeinflüsse können dazu führen, dass ein Quittiersignal 2 in einem Bereich der Busleitung 2 breiter ist als in einem anderen Bereich. Wird die Dauer des Quittierungssignals 7 nicht nur von einem Teilnehmer 3, 5, d.h. an einem einzigen Ort ermittelt, sondern von mehreren oder allen Teilnehmern 3, 5, kann folglich eine geografische Differenzierung der Signalqualität entlang der Busleitung 2 erfolgen. Kritische Teilnehmer 3, 5 können auf diese Weise erkannt werden.

Darüber hinaus muss die Dauer des Quittiersignals 7 an einem bestimmten Ort des Kommunikationsnetzwerks 1 nicht immer gleich sein. Sie kann sich vielmehr zeitlich ändern, da die teilnehmerintegrierte Synchronisation der Teilnehmer 3, 5 von dem Kommunikationsverhalten auf der Busleitung 1 abhängig ist. Es ist daher von Vorteil, eine kontinuierliche Bestimmung der Dauer des Quittiersignals 7 vorzunehmen, da hiermit zeitliche Änderungen der Signalqualität erfasst werden können.

Durch die Verwendung der Dauer des Quittiersignals 7 als Maß für die Signalqualität der Buskommunikation ist das erfindungsgemäße Verfahren unabhängig von den CAN spezifischen Synchronisierungsregeln, einem etwaigen Bitstopfen (Bit stuffing) oder der Länge des Arbitrierungs- oder Datenfeldes, weil es am Ende eine Datentelegramms 6 auftritt und das letzte dominant gesendete Bit ist.

Figur 3 zeigt eine prinzipielle Blockdarstellung eines Teilnehmers 3, der Teil der Elektronik der Pumpe 4 ist. Er umfasst eine Schnittstelle 12, über die der Teilnehmer 3 mit dem Bus 2 verbunden ist und mit anderen Teilnehmern 3 über den Bus 2 kommunizieren kann sowie ein CAN-Controller 13, der die Steuerung der Kommunikation vornimmt und die normalen Protokollaufgaben für CAN übernimmt. Die Verbindung von der Schnittstelle 12 zum Bus 2 ist durch zwei Leitungen veranschaulicht, von denen eine Leitung das CAN-L und eine Leitung das CAN-H Signal überträgt. Gemeinsam geben die Leitungen den Status des Busses 2 an. Da die CAN Kommunikation differentielle Signale verwendet, liegen die übertragenen Informationen in der Relation der Pegel auf den beiden Leitungen zu einander. Die Schnittstelle 12 enthält einen Pegelwandler, gegebenenfalls als diskrete Beschaltung, um die differentiellen CAN-BUS Signale (dominant/ rezessiv) in TTL-Signale (Transistor-to-Transistor Logic) und vice versa zu wandeln, welche dann für eine teilnehmerinterne Kommunikation verwendet werden können. So liegt innerhalb des Teilnehmers 3 in Richtung des Busses 2 vor der Schnittstelle 12 ein über den Bus 2 zu sendendes Sendesignal Tx sowie aus Richtung des Busses 2 hinter der Schnittstelle 12 ein von dem Bus 2 kommendes Empfangssignal Rx vor.

Die Empfangssignale Rx sind dem CAN-Controller 13 zugeleitet. Ferner ist der CAN-Controller 13 für das Senden von Datentelegrammen 6 über die Tx Leitung mit der Schnittstelle 12 verbunden.

Der Teilnehmer 3 umfasst ferner eine Detektionseinheit 10 zur Bestimmung eines die Dauer des Quittiersignals 7 beschreibenden Wertes, ein mit der Detektionseinheit 10 verbundenes Register 11 zur Speicherung des Wertes, und eine mit dem Register verbundene Steuereinheit 9 zur Auslesung des zumindest einen Registers 11. Die Empfangssignale Rx sind auch der Detektionseinheit 10 zugeleitet, so dass diese die Buskommunikation abhören kann.

Die Detektionseinheit 10 enthält in dieser Ausführungsvariante einen Zähler, der beim Auftreten des Quittiersignals 7 gestartet und am Ende gestoppt wird. Hierzu ist die Detektionseinheit 10 eingerichtet, den Zähler beim Auftreten einer Flanke zu einem dominanten Pegel D auf dem Bus 2 zu starten und beim Auftreten einer darauf folgenden Flanke zu einem rezessiven Pegel R auf dem Bus 2 zu stoppen. Der dann vorliegende Zählerstand bildet den in das Register 11 zu speichernde Wert. Die Steuereinheit 9 dient dem Auslesen des Registers 11. Die ausgelesene Dauer des Quittiersignals 7 wird dann in einem nicht näher dargestellten Permanentspeicher gespeichert und steht somit im Falle einer Abfrage durch den Server 5 zur Verfügung, welcher diese dann auswertet, um die Signalqualität zu bestimmen.

Die Steuereinheit 9 ist vom CAN-Controller 13 baulich getrennt und steht mit diesem kommunikationstechnisch in Verbindung, um einen vom CAN-Controller 13 am Ende eines Datentelegramms 6 ausgesendeten Interrupt zu erhalten. Dieser Interrupt wird vom CAN-Controller 13 stets nach dem Empfang eines ordnungsgemäßen Datentelegramms 6 und auch nach dem Senden eines solchen ausgelöst. Damit ist der Zeitpunkt definiert, wann auf das Register 11 zur Auswertung der Bitdauer zugegriffen werden soll. Der Interrupt wird also erfindungsgemäß verwendet, um das Auslesen des Registers zu triggern. Hierzu dient die Verbindung zwischen CAN-Controller 13 und Steuereinheit 9, über die der Steuereinheit 9 der Interrupt zugeführt wird. Das gilt sowohl für Mikrocontroller mit internem CAN-Controller 13 als auch für Mikrocontroller mit externem CAN-Controller 13. Beispielsweise können alle Komponenten in Figur 3 Bestandteil eines Mikrocontrollers sein. Die Darstellung in Figur 3 betont jedoch die Kombination aus einem separaten CAN- Controller und einem externen Beobachter, der durch die Detektionseinheit 10 und das Register 11 gebildet ist, der jedoch nur zu einem definierten Zeitpunkt ein sinnvolles Signal liefert.

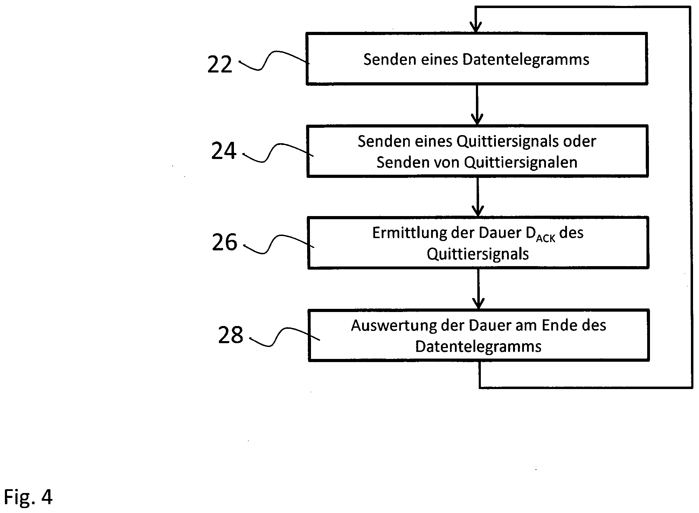

Den prinzipiellen Ablauf des erfindungsgemäßen Verfahrens zeigt Figur 4. Es setzt voraus, dass ein Datentelegramm 6 von einem der Teilnehmer 3, 5 gesendet wird, Schritt 22, woraufhin zumindest einer der anderen Teilnehmer 3, 5, erwartungsgemäß aber alle empfangenden Teilnehmer 3, 5 ein Quittiersignal 7 aussendet, Schritt 24. Daran schließt sich die Ermittlung der Dauer D_{ACK} des Quittiersignals 7 an, Schritt 26, welche dann am Ende des Datentelegramms 6 ausgewertet wird, Schritt 28.

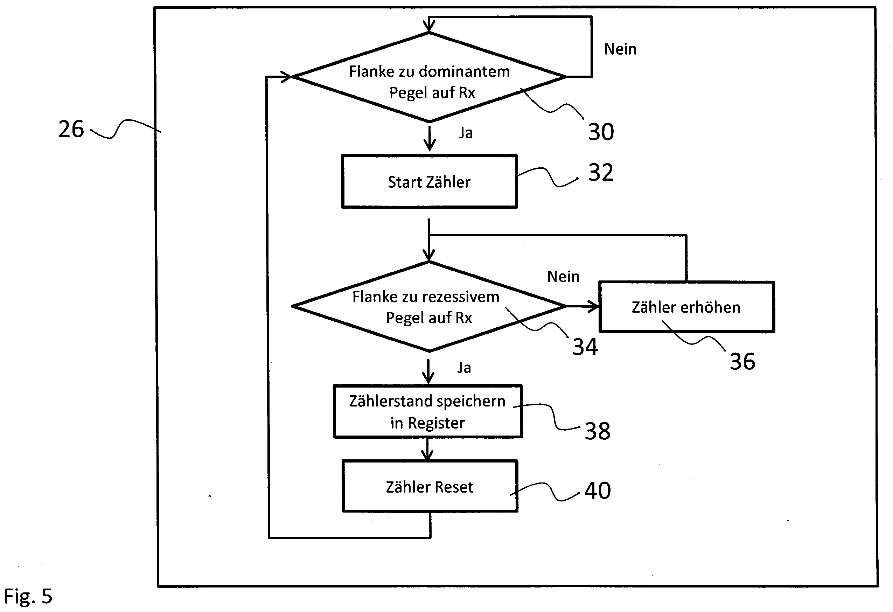

Figur 5 zeigt eine Detaildarstellung einer Variante des Schritts 26 für die Ermittlung der Dauer des Quittiersignals 7. Dabei wird in Schritt 30 von der Detektionseinheit 10 wiederholt überprüft, ob eine Flanke zu einem dominanten Pegel D auf der Empfangsleitung Rx auftritt. Im Hinblick auf das Datentelegramm 6 in Figur 2 bedeutet dies, dass auf eine fallende Flanke reagiert wird. Dies kann durch einen Digitaleingang erfolgen, der das Empfangssignal Rx abtastet. Tritt die Flanke auf, wird ein Zähler gestartet, Schritt 32. Anschließend wird die Empfangsleitung Rx daraufhin überprüft, ob eine Flanke zu einem rezessiven Pegel R auf der Empfangsleitung Rx auftritt, Schritt 34. Im Hinblick auf das Datentelegramm 6 in Figur 2 bedeutet dies, dass auf eine steigende Flanke reagiert wird. Liegt noch keine solche Flanke vor, wird der Zähler inkrementiert, d.h. um eins erhöht, siehe Schritt 36, und anschließend erneut überprüft, ob eine solche Flanke auftritt. Die Widerholrate für diese Schleife entspricht der Abtastrate, die hier 100 mal höher als die Datenrate ist, so dass auf ein Bit im Idealfall genau 100 Zählerpunkte entfallen. Die Schleife wird so oft und so lange wiederholt, bis tatsächlich eine Flanke zu einem rezessiven Pegel R erkannt wird. Ist dies der Fall, wird der dann vorliegende Zählerstand in das Register 11 gespeichert, Schritt 38 und der Zähler sodann zurückgesetzt (Reset), Schritt 40. An dieser Stelle ist noch nicht bekannt, ob der Zählerstand die Dauer des Quittiersignals 7 beschreibt, da hier nicht gezielt dieses dominante Bit vermessen wurde, sondern vielmehr ein beliebiges Signal, das aus einem oder mehr dominanten Bits besteht. Ob es sich bei dem vermessenen Signal um das gewünschte Quittiersignal handelt, ergibt sich daraus, dass das Datentelegramm nach dem vermessenen Signal beendet ist. Ist dies der Fall, wird das Register 11 ausgelesen und dessen Inhalt verarbeitet. Es ist dann unkritisch, wenn das Register 11 überschrieben wird, weil der interessierende Inhalt bereits gelesen wurde. Ferner ist Überschreiben auch dann unkritisch, wenn der ermittelte Zählerstand nicht die Dauer D_{ACK} des Quittiersignals sondern eines anderen Bits oder einer Bitfolge repräsentiert. Deshalb werden die Verfahrensschritte in Figur 5 nach dem Reset des Zählers wiederholt und es wird das nächste dominant gesendete Bit oder die nächste Bitfolge vermessen. Der dann neu abgespeicherte Zählerstand überschreibt den vorherigen Zählerstand im Register.

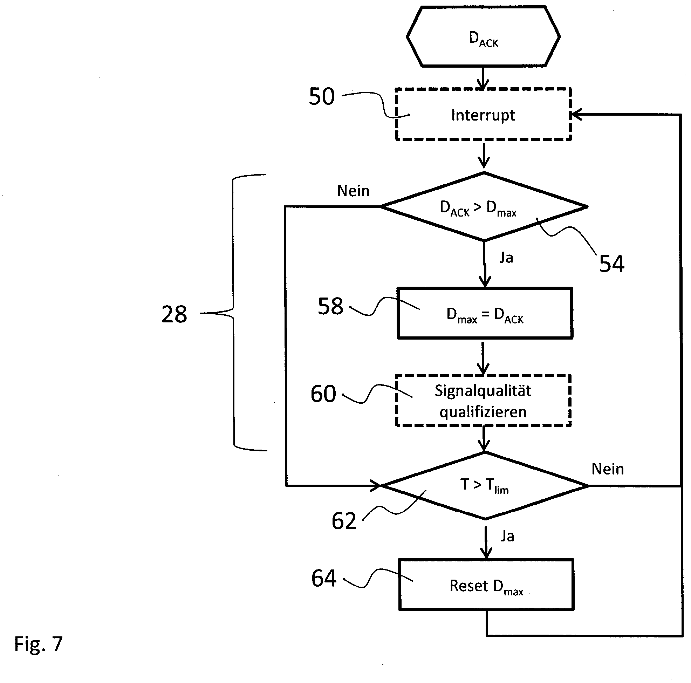

Figur 7 zeigt, wie die Auswertung der ermittelten Dauer D_{ACK} erfolgt. Dabei wird davon ausgegangen, dass in dem Register 11 ein Zählerstand gespeichert ist. Dieser entspricht dann der interessierenden Dauer D_{ACK} des Quittiersignals 7, wenn das Datentelegramm zu Ende ist. Um dies zu erkennen, wird ein Interrupt genutzt, der vom CAN-Controller 13 nach dem Empfang eines ordnungsgemäßen Datentelegramms 6 ausgelöst wird. Das Auftreten dieses Interrupts ist in Figur 7 mit Schritt 50 bezeichnet. In diesem Fall liest die Steuereinheit 9 das Register 11 aus und erhält einen Wert, der die numerische Dauer des Quittiersignals beschreibt.

Es schließt sich dann die Ermittlung der maximalen Dauer Dₘₐₓ innerhalb eines festen Zeitraums Tₗᵢₘ an. Das ist für viele Fälle die einfachste Bewertung, die den geringsten Aufwand für die Auswertung bedeutet. Ganz zu Beginn des Verfahrens kann die Maximaldauer Dₘₐₓ initialisiert, beispielswiese mit null belegt worden sein. Es erfolgt dann zunächst ein Vergleich, Schritt 54, ob die ermittelte Dauer D_{ACK} größer als die maximale Dauer Dₘₐₓ ist. Dies wird naturgemäß zu Beginn des Verfahrens nicht der Fall sein, so dass anschließend die aktuell gemessene Dauer D_{ACK} des Quittiersignals 7 als maximale Dauer Dₘₐₓ gesetzt wird, Schritt 58. In dem nächsten Schritt 60 wird die Signalqualität anhand der Maximaldauer Dₘₐₓ qualifiziert. Dieser Schritt 60 muss nicht an dieser Stelle, sondern kann auch an anderer Stelle erfolgen, da er nicht innerhalb des Teilnehmers 3 ausgeführt werden muss. Erfolgt die Auswertung von dem Server 5, so fragt dieser irgendwann den Teilnehmer 3 nach der von ihm ermittelten und gespeicherten Maximaldauer Dₘₐₓ. Der Teilnehmer übermittelt dann diese Maximaldauer Dₘₐₓ in einem Datentelegramm 6 an den Server 5. Dies kann beispielsweise an der Stelle des Schritts 60 in Figur 7 erfolgen, muss es jedoch nicht.

Nach der Überprüfung in Schritt 54 wird geprüft, ob ein aktueller Zeitraum T das Ende eines vorgegebenen Zeitraums Tₗᵢₘ erreicht hat. Ist dies der Fall, wird die Maximaldauer Dₘₐₓ zurückgesetzt (Reset) und erneut ermittelt. Ist dies jedoch nicht der Fall, wird zunächst nichts gemacht. Vielmehr wartet die Steuereinheit 9 auf den nächsten Interrupt, Schritt 50, infolge dessen das Register mit einem neuen Zählerstand D_{ACK} ausgelesen wird. Ist diese Dauer größer als die vorherige Dauer, wird diese neue Dauer D_{ACK} als Maximaldauer D_{MAX} gesetzt. Ist dies jedoch nicht der Fall, wird erneut überprüft, ob das Ende des Bezugszeitraums Tₗᵢₘ erreicht ist. Dieses Prozedere wird nun immer wieder am Ende eines ordnungsgemäßen Datentelegramms 6 ausgeführt.

Gemäß einer anderen Auswertestrategie kann zusätzlich eine Ermittlung des besten Wertes in einem Zeitraum erfolgen, um die Schwankung der ACK-Dauer zu bestimmen.

Alternativ oder zusätzlich können alle Quittiersignaldauern D_{ACK} in einem Teilnehmer 3, beispielsweise dem Server 5 für einen bestimmten Zeitbereich gesammelt werden, um aus der zeitlichen Veränderung Schlüsse zu ziehen. Schwankungen in der Quittiersignaldauer D_{ACK} können auf variable externe Einflüsse hindeuten, z.B. mechanische Belastungen von Leitungen.

Alternativ oder zusätzlich kann ein Vergleich der Quittiersignaldauern D_{ACK} verschiedener Teilnehmer 3, 5 bezogen auf die gleiche Nachricht, um einen lokal wirkenden Fehler räumlich zuordnen zu können. Das könnte z.B. eine elektrische Einstreuung sein, die am Ort ihrer Einstreuung stärkere Wirkung auf einen Teilnehmer 3, 5 hat als auf die anderen, die weiter entfern sind, wodurch die Leitungsverluste die Störung abmildern.

Alternativ oder zusätzlich kann eine Synchronisation der Messergebnisse mit der Auswertung erfolgen, um durch ein kontrolliertes Sendeverhalten aller Teilnehmer 3, 5 die relativen Einflüsse besser beurteilen zu können. Dadurch kann auf die Topologie der Leitungsverlegung geschlossen werden.

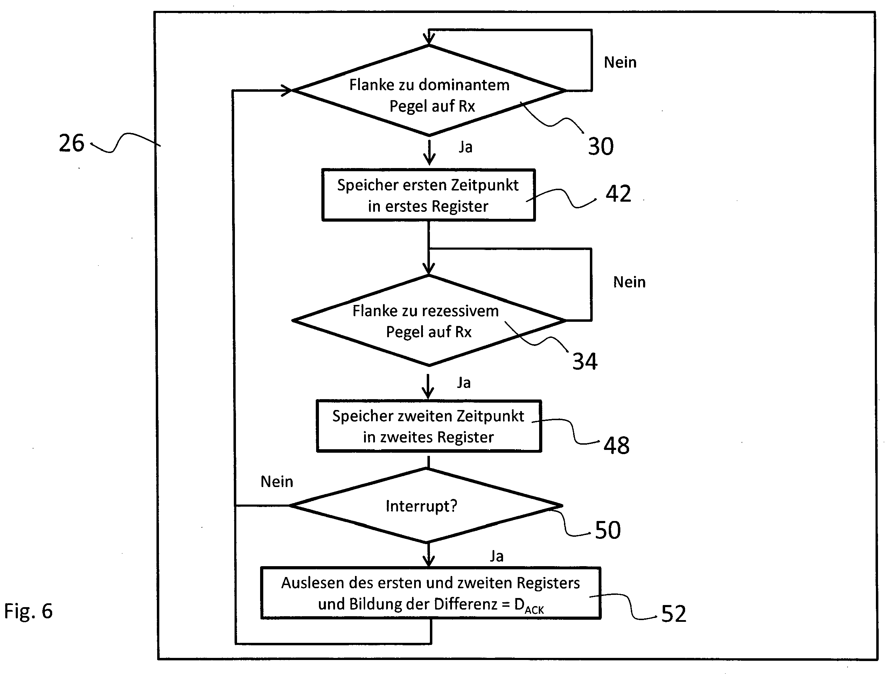

Figur 6 zeigt eine Alternative zu den Schritten in Figur 5 für die Ermittlung der Dauer D_{ACK} des Quittiersignals 7.Anstelle des Zählers bei der Variante in Figur 5 wird hier ein Zeitgeber verwendet, der im Falle einer Flanke zu einem dominanten Pegel D einen ersten Zeitpunkt in ein erstes Register schreibt, Schritt 42. Der erste Zeitpunkt gibt dabei den Beginn eines Signals aus dominanten Pegeln an. Anschließend wird immer wieder überprüft (Schritt 34), ob eine Flanke zu einem rezessiven Pegel R auf der Empfangsleitung Rx auftritt. Liegt eine solche vor, wird ein zweiter Zeitpunkt in ein zweites Register gespeichert. Der zweite Zeitpunkt gibt dabei das Ende des Signals aus dominanten Pegeln an. An dieser Stelle ist ebenfalls noch nicht bekannt, ob es sich bei den beiden Zeitpunkten um diejenigen handelt, die zu einem Quittiersignal 7 gehören. Dies ist erst dann eindeutig, wenn der o.g. Interrupt 50 kommt, der das Ende des Datentelegramms 6 anzeigt. Dieser löst dann das Auslesen des ersten und zweiten Registers aus, Schritt 52, wobei aus den beiden Zeitpunkten die Differenz gebildet wird, um die zeitliche Dauer D_{ACK} des Quittiersignals 7 zu erhalten.

An die Schritte gemäß Figur 6 schließen sich dann unmittelbar die Schritte aus Figur 7 an, jedoch ohne den dort dargestellten Interrupt 50, weil dieser bereits Teil der Schrittfolge in Figur 6 war.

Die eigentliche Bestimmung der Signalqualität in Schritt 60 erfolgt aus der ermittelten Maximaldauer Dₘₐₓ. Diese kann mit mehreren Grenzwerten oder Grenzwertbereichen verglichen werden, um die Signalqualität zu qualifizieren. Wenngleich ein idealer Wert im Falle einer 100-fachen Überabtastung bei 100 liegt, und Werte von 100 - 110 zu erwarten sind, wenn die üblichen Verlege- und Terminierungsvorschriften eingehalten werden, können aufgrund von Ungenauigkeiten durchaus auch kleinere Werte auftreten. Daher ist es sinnvoll, auch einen Bereich unter 100 Zählerpunkten zu berücksichtigen. Liegt der Wert der Maximaldauer Dₘₐₓ beispielsweise zwischen 90 und 110, kann von einer guten Signalqualität ausgegangen werden.

Eine Maximaldauer zwischen 110 und 140 deutet bereits auf eine schlechte Signalqualität, wenngleich die Kommunikation dennoch möglich ist, da das Quittierfeld ACK 2 Bits lang ist, und ein Datentelegramm 6 erst bei einem 200 Zählerpunkte, d.h. bei einem 2 Bit langen Quittiersignal 7 ganz sicher ungültig wird. Wann genau bei Werten größer als 140 die anderen Fehlermechanismen des CAN greifen, ist schwer vorherzusagen, dieser Bereich ist aber im Sinne eines stabilen Betriebs zu vermeiden und widerspricht auch gängigen Planungsregeln Der Bereich von 110 - 140 ist besonders interessant, da er ohne dieses Verfahren nicht auffallen würde. Er liefert bereits deutliche Hinweise auf eine problematische Leitungsqualität. Es kann sinnvoll sein, diesen Bereich feiner zu unterteilen.

Eine Maximaldauer Dₘₐₓ über 140 lässt auf eine sehr schlechte Signalqualität schließen, bei der die Kommunikation nicht mehr garantiert ist.

Entsprechend können die angegebenen Bereichsgrenzen die Grenzwerte bilden, deren Über- und/ oder Unterschreiten durch die Maximaldauer überprüft wird. Diese Überprüfung kann von einer Auswerteeinheit, die Teil der Steuereinheit 9 ist, oder von dem Server 5 durchgeführt werden.

## Patentansprüche

1. Verfahren zur Bestimmung der Signalqualität eines CAN-Protokoll basierten Kommunikationsnetzwerks (1) mit einem Bus (2) und zwei oder mehr über diesen mittels Datentelegrammen (6) kommunizierenden Teilnehmern (3), **dadurch gekennzeichnet, dass** die Dauer (D_{ACK}) eines Quittiersignals (7) ermittelt und ausgewertet wird, das von zumindest einem der Teilnehmer infolge des Empfangs eines Datentelegramms (6) gesendet wird.

2. Verfahren nach Anspruch 1, **dadurch gekennzeichnet, dass** die Ermittlung der Dauer (D_{ACK}) von einem, mehreren oder allen Teilnehmer (3) erfolgt.

3. Verfahren nach Anspruch 1 oder 2, **dadurch gekennzeichnet, dass** die Ermittlung der Dauer (D_{ACK}) innerhalb eines, mehrerer oder aller Teilnehmer (3) erfolgt.

4. Verfahren nach Anspruch 1, 2 oder 3, **dadurch gekennzeichnet, dass** die Dauer (D_{ACK}) zeitlich oder numerisch ermittelt wird.

5. Verfahren nach einem der vorherigen Ansprüche, **dadurch gekennzeichnet, dass** beim Auftreten des Quittiersignals (7) ein Zähler (10) gestartet und am Ende des Quittiersignals (7) wieder gestoppt wird, wobei der die Dauer (D_{ACK}) des Quittiersignals (7) beschreibende Stand des Zählers anschließend in ein Register (11) gespeichert wird.

6. Verfahren nach einem der Ansprüche 1 bis 4, **dadurch gekennzeichnet, dass** beim Auftreten des Quittiersignals (7) ein erster Zeitpunkt ermittelt und in ein erstes Register und am Ende des Quittiersignals (7) ein zweiter Zeitpunkt ermittelt in ein zweites Register geschoben wird, wobei die beiden Register anschließend ausgelesen und aus der Differenz der Zeitpunkte die Dauer (D_{ACK}) des Quittiersignals (7) ermittelt wird.

7. Verfahren nach einem der Ansprüche 1 bis 5, **dadurch gekennzeichnet, dass** bei jedem Auftreten einer Flanke zu einem dominanten Pegel (D) auf dem Bus (2) ein Zähler (10) gestartet und beim Auftreten einer darauf folgenden Flanke zu einem rezessiven Pegel (R) wieder gestoppt wird, wobei der die Dauer (D_{ACK}) des Quittiersignals (7) beschreibende Stand des gestoppten Zählers (10) anschließend in ein Register (11) gespeichert und am Ende eines empfangenen Datentelegramms (6) aus dem Register (11) ausgelesen wird.

8. Verfahren nach einem der Ansprüche 1 bis 4 oder 6, **dadurch gekennzeichnet, dass** bei jedem Auftreten einer Flanke zu einem dominanten Pegel (D) auf dem Bus (2) von einem Zeitgeber (10) ein erster Zeitpunkt ermittelt und in ein erstes Register gespeichert wird und beim Auftreten einer darauf folgenden Flanke zu einem rezessiven Pegel (R) von dem Zeitgeber (10) ein zweiter Zeitpunkt ermittelt und in ein zweites Register gespeichert wird, wobei am Ende eines empfangenden Datentelegramms (6) das erste und zweite Register ausgelesen werden und aus der Differenz der Zeitpunkte die Dauer (D_{ACK}) des Quittiersignals (7) ermittelt wird.

9. Verfahren nach Anspruch 7 oder 8, **dadurch gekennzeichnet, dass** ein zuvor im Register (11) gespeicherter Zählerstand durch die Abspeicherung eines neuen Zählerstands immer wieder überschrieben wird oder dass die im ersten und zweiten Register gespeicherten Zeitpunkte durch die Abspeicherung neuer Zeitpunkte immer wieder überschrieben werden.

10. Verfahren nach einem der Ansprüche 5 bis 9, **dadurch gekennzeichnet, dass** das Auslesen des oder der Register (11) durch einen Interrupt eines CAN-Controllers (13) am Ende des Empfangs oder des Sendens eines ordnungsgemäßen Datentelegramms (6) ausgelöst wird.

11. Verfahren nach einem der vorherigen Ansprüche, **dadurch gekennzeichnet, dass** ein Server (5) die ermittelte Dauer (D_{ACK}) des Quittiersignals (7) bei zumindest einem der Teilnehmer (3) abfragt und bewertet.

12. Verfahren nach einem der vorherigen Ansprüche, **dadurch gekennzeichnet, dass** die Ermittlung der Dauer (D_{ACK}) mittels einer Abtastung erfolgt, deren Abtastrat 10 bis 200 Mal, insbesondere 100 Mal höher als die Datenrate der Kommunikation auf der Busleitung (2) ist.

13. Verfahren nach einem der vorherigen Ansprüche, **dadurch gekennzeichnet, dass** die Dauer (D_{ACK}) kontinuierlich ermittelt wird.

14. Verfahren nach einem der vorherigen Ansprüche, **dadurch gekennzeichnet, dass** die maximale Dauer (Dₘₐₓ) aller Quittiersignale (7), die innerhalb eines vorgegebenen Zeitraums (T) aufgetreten sind, ermittelt wird.

15. Verfahren nach Anspruch 14, **dadurch gekennzeichnet, dass** die ermittelte maximale Dauer (Dₘₐₓ) mit zumindest einem Wertebereich verglichen wird, dem eine bestimmte quantifizierte Signalqualität zugeordnet ist.

16. Teilnehmer (3) eines CAN-Protokoll basierten Kommunikationsnetzwerks (1) zur Bestimmung der Signalqualität in dem Kommunikationsnetzwerk (1), umfassend eine Schnittstelle (12) zur Kommunikation mit anderen Teilnehmern (3) über einen Bus (2) des Kommunikationsnetzwerks (1) und mit einem CAN-Controller (13) zur Steuerung der Kommunikation, **gekennzeichnet durch**
- eine Detektionseinheit (10) zur Bestimmung zumindest eines die Dauer (D_{ACK}) eines Quittiersignals beschreibenden oder ihre Ermittlung ermöglichenden Wertes, wobei das Quittiersignal von zumindest einem der anderen Teilnehmer (3) infolge des Empfangs eines Datentelegramms (6) gesendet wird,
- wenigstens ein mit der Detektionseinheit (10) verbundenes Register (11) zur Speicherung des zumindest einen Wertes, und
- eine mit dem zumindest einen Register verbundene Steuereinheit (9) zur Auslesung des zumindest einen Registers (11).

17. Teilnehmer nach Anspruch 16, **dadurch gekennzeichnet, dass** die Steuereinheit (9) Mittel zur Bestimmung der Signalqualität aus der Dauer (D_{ACK}) des Quittiersignals (7) aufweist.

18. Teilnehmer nach Anspruch 16 oder 17, **dadurch gekennzeichnet, dass** die Steuereinheit (9) mit dem CAN-Controller (13) baulich eine Einheit bildet, um einen vom CAN-Controller (13) am Ende eines Datentelegramms (6) aussendbaren Interrupt zu erhalten.

19. Teilnehmer nach Anspruch 16 , 17 oder 18, **dadurch gekennzeichnet, dass** die Detektionseinheit (10) einen Zähler aufweist und dazu eingerichtet ist, diesen Zähler beim Auftreten einer Flanke zu einem dominanten Pegel (D) auf dem Bus (2) zu starten und beim Auftreten einer darauf folgenden Flanke zu einem rezessiven Pegel (R) auf dem Bus (2) zu stoppen, und wobei der dann vorliegende Zählerstand dem in das Register (11) zu schreibenden Wert entspricht.

20. Teilnehmer nach Anspruch 16, 17 oder 18, **dadurch gekennzeichnet, dass** die Detektionseinheit (10) einen Zeitgeber aufweist und dazu eingerichtet ist, mittels des Zeitgebers beim Auftreten einer Flanke zu einem dominanten Pegel (D) auf dem Bus (2) einen ersten Zeitpunkt und beim Auftreten einer darauf folgenden Flanke zu einem rezessiven Pegel (R) auf dem Bus (2) einen zweiten Zeitpunkt zu ermitteln, wobei der erste und der zweite Zeitpunkt jeweils einem in jeweils ein Register zu schreibenden Wert entspricht.

21. Teilnehmer (3) nach einem der Ansprüche 16 bis 20, **dadurch gekennzeichnet, dass** er Teil der Elektronik eines elektromotorisch betriebenen Pumpenaggregats (4), eines Gateways oder einer Anzeigeeinheit ist.

## Claims

1. Method for determining the signal quality of a CAN-protocol-based communication network (1) having a bus (2) and two or more subscribers (3) communicating via the latter by means of data telegrams (6), **characterized in that** the duration (D_{ACK}) of an acknowledgement signal (7) that is sent by at least one of the subscribers as a result of the reception of a data telegram (6) is ascertained and evaluated.

2. Method according to Claim 1, **characterized in that** the duration (D_{ACK}) is ascertained by one, multiple or all subscriber(s) (3).

3. Method according to Claim 1 or 2, **characterized in that** the duration (D_{ACK}) is ascertained within one, multiple or all subscriber(s) (3).

4. Method according to Claim 1, 2 or 3, **characterized in that** the duration (D_{ACK}) is ascertained temporally or numerically.

5. Method according to one of the preceding claims, **characterized in that** a counter (10) is started on the occurrence of the acknowledgement signal (7) and stopped again at the end of the acknowledgement signal (7), wherein the count on the counter, which describes the duration (D_{ACK}) of the acknowledgement signal (7), is subsequently stored in a register (11).

6. Method according to one of Claims 1 to 4, **characterized in that** a first time is ascertained and shifted to a first register on the occurrence of the acknowledgement signal (7) and a second time is ascertained and shifted to a second register at the end of the acknowledgement signal (7), wherein the two registers are subsequently read and the duration (D_{ACK}) of the acknowledgement signal (7) is ascertained from the difference between the times.

7. Method according to one of Claims 1 to 5, **characterized in that** a counter (10) is started on every occurrence of an edge for a dominant level (D) on the bus (2) and stopped again on the occurrence of a subsequent edge for a recessive level (R), wherein the count on the stopped counter (10), which describes the duration (D_{ACK}) of the acknowledgement signal (7), is subsequently stored in a register (11) and, at the end of a received data telegram (6), read from the register (11).

8. Method according to one of Claims 1 to 4 or 6, **characterized in that** a timer (10) ascertains a first time and stores it in a first register on every occurrence of an edge for a dominant level (D) on the bus (2) and the timer (10) ascertains a second time and stores it in a second register on the occurrence of a subsequent edge for a recessive level (R), wherein the first and second registers are read at the end of a receiving data telegram (6) and the duration (D_{ACK}) of the acknowledgement signal (7) is ascertained from the difference between the times.

9. Method according to Claim 7 or 8, **characterized in that** a count previously stored in the register (11) is repeatedly overwritten by the storage of a new count or **in that** the times stored in the first and second registers are repeatedly overwritten by the storage of new times.

10. Method according to one of Claims 5 to 9, **characterized in that** the reading of the register(s) (11) is initiated by an interrupt from a CAN controller (13) at the end of the reception or sending of a correct data telegram (6).

11. Method according to one of the preceding claims, **characterized in that** a server (5) requests the ascertained duration (D_{ACK}) of the acknowledgement signal (7) from at least one of the subscribers (3) and rates it.

12. Method according to one of the preceding claims, **characterized in that** the duration (D_{ACK}) is ascertained by means of sampling whose sampling rate is 10 to 200 times, particularly 100 times, higher than the data rate of the communication on the bus line (2).

13. Method according to one of the preceding claims, **characterized in that** the duration (D_{ACK}) is ascertained continuously.

14. Method according to one of the preceding claims, **characterized in that** the maximum duration (Dₘₐₓ) of all acknowledgement signals (7) that have occurred within a prescribed period (T) is ascertained.

15. Method according to Claim 14, **characterized in that** the ascertained maximum duration (Dₘₐₓ) is compared with at least one range of values that has an associated determined quantified signal quality.

16. Subscriber (3) of a CAN-protocol-based communication network (1) for determining the signal quality in the communication network (1), comprising an interface (12) for communication with other subscribers (3) via a bus (2) of the communication network (1) and with a CAN controller (13) for controlling the communication,
**characterized by**
- a detection unit (10) for determining at least one value describing the duration (D_{ACK}) of an acknowledgement signal or allowing ascertainment of said duration, wherein the acknowledgement signal is sent by at least one of the other subscribers (3) as a result of the reception of a data telegram (6),
- at least one register (11), connected to the detection unit (10), for storing the at least one value, and
- a control unit (9), connected to the at least one register, for reading the at least one register (11).

17. Subscriber according to Claim 16, **characterized in that** the control unit (9) has means for determining the signal quality from the duration (D_{ACK}) of the acknowledgement signal (7).

18. Subscriber according to Claim 16 or 17, **characterized in that** the control unit (9) physically forms a unit with the CAN controller (13) in order to obtain an interrupt that can be sent by the CAN controller (13) at the end of a data telegram (6).

19. Subscriber according to Claim 16, 17 or 18, **characterized in that** the detection unit (10) has a counter and is set up to start this counter on the occurrence of an edge for a dominant level (D) on the bus (2) and to stop it on the occurrence of a subsequent edge for a recessive level (R) on the bus (2), and wherein the count that then obtains corresponds to the value that is to be written to the register (11).

20. Subscriber according to Claim 16, 17 or 18, **characterized in that** the detection unit (10) has a timer and is set up to ascertain a first time by means of the timer on the occurrence of an edge for a dominant level (D) on the bus (2) and to ascertain a second time on the occurrence of a subsequent edge for a recessive level (R) on the bus (2), wherein the first and second times each correspond to a value that is to be written to a respective register.

21. Subscriber (3) according to one of Claims 16 to 20, **characterized in that** it is part of the electronics of a pump unit (4), a gateway or a display unit that is operated by electric motor.

## Revendications

1. Procédé de détermination de la qualité de signal d'un réseau de communication à base de protocole CAN (1) comportant un bus (2) et deux abonnés (3) ou plus communiquant par l'intermédiaire de celui-ci au moyen de télégrammes de données (6), **caractérisé en ce que** la durée (D_{ACK}) d'un signal d'acquittement (7) est déterminée et évaluée, et est émise par au moins l'un des abonnés comme conséquence de la réception d'un télégramme de données (6).

2. Procédé selon la revendication 1, **caractérisé en ce que** la détermination de la durée (D_{ACK}) est effectuée par un abonné, plusieurs abonnés ou la totalité des abonnés (3).

3. Procédé selon la revendication 1 ou 2, **caractérisé en ce que** la détermination de la durée (D_{ACK}) est effectuée chez un abonné, plusieurs abonnés ou la totalité des abonnés (3).

4. Procédé selon la revendication 1, 2 ou 3, **caractérisé en ce que** la durée (D_{ACK}) est déterminée temporellement ou numériquement.

5. Procédé selon l'une quelconque des revendications précédentes, **caractérisé en ce que**, lors de l'apparition du signal d'acquittement (7), un compteur (10) est démarré et est de nouveau arrêté à la fin du signal d'acquittement (7), dans lequel l'état du compteur décrivant la durée (D_{ACK}) du signal d'acquittement (7) est ensuite stocké dans un registre (11).

6. Procédé selon l'une quelconque des revendications 1 à 4, **caractérisé en ce qu'**un premier temps est déterminé et est décalé dans un premier registre lors de l'apparition du signal d'acquittement (7), et un deuxième temps est déterminé et est décalé dans un deuxième registre à la fin du signal d'acquittement (7), dans lequel les deux registres sont ensuite lus et la durée (D_{ACK}) du signal d'acquittement (7) est déterminée à partir de la différence entre les temps.

7. Procédé selon l'une quelconque des revendications 1 à 5, **caractérisé en ce qu'**un compteur (10) est démarré lors de chaque apparition d'un front par rapport à un niveau dominant (D) sur le bus (2) et **en ce que** ledit compteur est de nouveau arrêté lors de l'apparition d'un front suivant par rapport à un niveau récessif (R), dans lequel l'état décrivant la durée (D_{ACK}) du signal d'acquittement (7) du compteur (10) arrêté est ensuite stocké dans un registre (11) et est lu depuis le registre (11) à la fin d'un télégramme de données (6) reçu.

8. Procédé selon l'une quelconque des revendications 1 à 4 ou 6, **caractérisé en ce qu'**un premier temps est déterminé par un temporisateur (10) lors de chaque apparition d'un front par rapport à un niveau dominant (D) sur le bus (2) et est stocké dans un premier registre et **en ce qu'**un deuxième temps est déterminé et est stocké dans un deuxième registre lors de l'apparition d'un front suivant par rapport à un niveau récessif (R) du temporisateur (10), dans lequel, à la fin d'un télégramme de données (6) réceptrice, les premier et deuxième registres sont lus et la durée (D_{ACK}) du signal d'acquittement (7) est déterminée à partir de la différence entre les temps.

9. Procédé selon la revendication 7 ou 8, **caractérisé en ce qu'**un état de comptage préalablement stocké est systématiquement de nouveau réécrit dans le registre (11) en stockant en mémoire un nouvel état de comptage ou **en ce que** les temps stockés dans les premier et deuxième registres sont systématiquement de nouveau réécrits en stockant en mémoire de nouveaux temps.

10. Procédé selon l'une quelconque des revendications 5 à 9, **caractérisé en ce que** la lecture du ou des registre(s) (11) est déclenchée par une interruption d'un contrôleur CAN (13) à la fin de la réception ou de l'émission d'un télégramme de données (6) correct.

11. Procédé selon l'une quelconque des revendications précédentes, **caractérisé en ce qu'**un serveur (5) demande et évalue la durée déterminée (D_{ACK}) du signal d'acquittement (7) pour au moins l'un des abonnés (3).

12. Procédé selon l'une quelconque des revendications précédentes, **caractérisé en ce que** la détermination de la durée (D_{ACK}) est effectuée au moyen d'un échantillonnage dont la fréquence d'échantillonnage est 10 à 200 fois, notamment 100 fois supérieure au débit de données de la communication sur la ligne de bus (2).

13. Procédé selon l'une quelconque des revendications précédentes, **caractérisé en ce que** la durée (D_{ACK}) est déterminée en continu.

14. Procédé selon l'une quelconque des revendications précédentes, **caractérisé en ce que** la durée maximale (Dₘₐₓ) de la totalité des signaux d'acquittement (7), qui sont apparus à l'intérieur de l'intervalle de temps (T) prédéterminé, est déterminée.

15. Procédé selon la revendication 14, **caractérisé en ce que** la durée maximale (Dₘₐₓ) déterminée est comparée à au moins une plage de valeurs à laquelle est associée une qualité de signal quantifiée déterminée.

16. Abonné (3) d'un réseau de communication à base de protocole CAN (1) pour la détermination de la qualité de signal dans le réseau de communication (1), comprenant une interface (12) permettant de communiquer avec d'autres abonnés (3) par l'intermédiaire d'un bus (2) du réseau de communication (1) et comportant un contrôleur CAN (13) permettant de commander la communication, **caractérisé par**
- une unité de détection (10) destinée à déterminer au moins une valeur décrivant la durée (D_{ACK}) d'un signal d'acquittement ou permettant sa détermination, dans lequel le signal d'acquittement est émis par au moins l'un des autres abonnés (3) comme conséquence de la réception d'un télégramme de données (6),
- au moins un registre (11) relié à l'unité de détection (10) pour stocker l'au moins une valeur, et
- une unité de commande (9) reliée à l'au moins un registre pour lire l'au moins un registre (11).

17. Abonné selon la revendication 16, **caractérisé en ce que** l'unité de commande (9) comporte des moyens destinés à déterminer la qualité de signal à partir de la durée (D_{ACK}) du signal d'acquittement (7).

18. Abonné selon la revendication 16 ou 17, **caractérisé en ce que** l'unité de commande (9) forme structurellement une unité avec le contrôleur CAN (13), afin d'obtenir une interruption pouvant être émise par le contrôleur CAN (13) à la fin d'un télégramme de données (6).

19. Abonné selon la revendication 16, 17 ou 18, **caractérisé en ce que** l'unité de détection (10) comporte un compteur et est conçue pour démarrer ledit compteur lors de l'apparition d'un front par rapport à un niveau dominant (D) sur le bus (2) et pour l'arrêter lors de l'apparition d'un front suivant par rapport à un niveau récessif (R) sur le bus (2), et dans lequel l'état de comptage qui est ensuite présent correspond à la valeur devant être écrite dans le registre (11).

20. Abonné selon la revendication 16, 17 ou 18, **caractérisé en ce que** l'unité de détection (10) comporte un temporisateur et est conçue pour déterminer au moyen du temporisateur un premier temps lors de l'apparition d'un front par rapport à un niveau dominant (D) sur le bus (2), et un deuxième temps lors de l'apparition d'un front suivant par rapport à un niveau récessif (R) sur le bus (2), dans lequel les premier et deuxième temps correspondent respectivement à une valeur devant respectivement être écrite dans un registre.

21. Abonné (3) selon l'une quelconque des revendications 16 à 20, **caractérisé en ce que** celui-ci fait partie de l'électronique d'un groupe motopompe électrique entraîné par moteur (4), d'une passerelle ou d'une unité d'affichage.
